# EUROPEAN PATENT APPLICATION

(11) **EP 4 265 760 A1**
(43) Date of publication of application: **25.10.2023**
(21) Application number: 21906193.4
(22) Date of filing: 08.11.2021
(51) Int. Cl.: C22C 38/00, C22C 38/16, B23K 35/30, B23K 35/368

(54) **FLUX-CORED WIRE AND GAS-SHIELDED ARC WELDING METHOD**

(30) Priority: 18.12.2020 JP 2020210727
(71) Applicant: KABUSHIKI KAISHA KOBE SEIKO SHO (KOBE STEEL, LTD.), Hyogo 651-8585 (JP)
(72) Inventor: NAGAMI, Masayuki, Fujisawa-shi, Kanagawa 251-8551 (JP); SASAKURA, Shuji, Fujisawa-shi, Kanagawa 251-8551 (JP); INOMOTO, Masahiro, Kobe-shi, Hyogo 651-2271 (JP)
(74) Representative: Müller-Boré & Partner Patentanwälte PartG mbB
(86) International application number: PCT/JP2021/041048
(87) International publication number: WO 2022/130829

(57) **Abstract**

Provided is a flux-cored wire from which it is possible to obtain, not only when being As-welded but also after PWHT, a weld metal having excellent toughness at low temperatures and tensile strength even when the Ni content in the wire is not more than 1 mass%. This flux-cored wire contains, in mass% with respect to the total mass of the wire, 0.026-0.060% of C, more than 0% but not more than 0.50% of Si, 1.3-2.8% of Mn, 0.20-1.50% of Cu, 0.45-1.00% of Ni, 0.15-0.65% of Mo, 0.30-0.65% of Mg, and 0.001-0.010% of B, contains not more than 0.10% of Cr and not more than 0.10% of Al, and has a Nb content and a V content that result in, when being respectively represented as [Nb] and [V] in mass% with respect to the total mass of the wire, [Nb]+[V] being not more than 0.015.

## Description

### Technical Field

The present invention relates to a flux-cored wire for gas-shielded arc welding, which is used for welding a steel material with a tensile strength of 620 MPa class, and a gas-shielded arc welding method.

### Background Art

Offshore structures used for the drilling and production of petroleum, gas, or the like and pipelines used for the transportation of oil, gas, or the like are increasing in size and operation in cold regions, and steel plates and welding materials used in the construction of these welded structures are required to have high strength and low-temperature toughness.

When such welded structures are constructed, a post-weld heat treatment (PWHT) may be performed for stress relief after the welding procedure.

However, PWHT may reduce the strength and toughness of a weld zone and impair required characteristics. Thus, a flux-cored wire to which Ni is added is generally used to improve the strength and toughness after PWHT.

On the other hand, among these welded structures, in oil well pipes and LPG tanks, hydrogen sulfide contained in crude oil or crude propane often causes a corrosion reaction. Hydrogen generated by this corrosion reaction may invade steel and cause sulfide stress corrosion cracking, which is a type of hydrogen embrittlement cracking. Higher strength results in more stress corrosion cracking, and the addition of an excessive amount of Ni to a flux-cored wire therefore increases the risk of sulfide stress corrosion cracking. The term "strength", as used herein, refers to yield strength and tensile strength.

Thus, to address these problems, the National Association of Corrosion Engineers (NACE) standard (NACE MR0175) limits the Ni content of weld metals to 1% by mass or less. Thus, there is a need for a welding material for a weld metal with a Ni content of 1% by mass or less and with high strength and low-temperature toughness after PWHT.

For example, Patent Literature 1 discloses a flux-cored wire for carbon dioxide shielded arc welding, which contains a slag component composed of a metal oxide composed mainly of TiOz and a compound containing Na and K, an optimum alloy component, and a deoxidizer. Patent Literature 2 proposes a flux-cored wire for Ar-CO₂ mixed gas shielded arc welding, which contains a slag component composed of a metal oxide composed mainly of TiOz and a fluorine compound containing Na and K, an optimum alloy component, and a deoxidizer.

According to Patent Literature 1 and Patent Literature 2, it is possible to produce a weld metal with high welding performance in all-position welding, high cold cracking resistance, high low-temperature toughness, and good crack tip opening displacement (CTOD) characteristics.

### Citation List

### Patent Literature

PTL 1: Japanese Unexamined Patent Application Publication No. 2017-164772
PTL 2: Japanese Unexamined Patent Application Publication No. 2017-94360

### Summary of Invention

### Technical Problem

In Patent Literature 1, however, the Ni content ranges from 0.8% to 3.0% by mass, which does not necessarily satisfy the Ni content of a weld metal specified in NACE MR 0175, and the strength and low-temperature toughness after PWHT are not taken into consideration. In Patent Literature 2, although the Ni content ranges from 0.1% to 0.5% by mass, the strength and low-temperature toughness after PWHT are not taken into consideration.

Thus, there is an increasing demand for a flux-cored wire that can satisfy the Ni content of a weld metal specified in NACE MR 0175 and can provide a weld metal with high strength and low-temperature toughness after PWHT.

The present invention has been made in view of such situations and aims to provide a flux-cored wire that, even having a Ni content of 1% by mass or less, can provide a weld metal with high strength and low-temperature toughness not only as it is welded (hereinafter also referred to as "as-welded") but also after PWHT.

### Solution to Problem

The object of the present invention is achieved by the following [1] relating to a flux-cored wire.
[1] A flux-cored wire with a steel sheath filled with flux, containing:
   based on a total mass of the wire,
   C: 0.026% by mass or more and 0.060% by mass or less,
   Si: more than 0% by mass and 0.50% by mass or less,
   Mn: 1.3% by mass or more and 2.8% by mass or less,
   Cu: 0.20% by mass or more and 1.50% by mass or less,
   Ni: 0.45% by mass or more and 1.00% by mass or less,
   Mo: 0.15% by mass or more and 0.65% by mass or less,
   Mg: 0.30% by mass or more and 0.65% by mass or less, and
   B: 0.001% by mass or more and 0.010% by mass or less,
   provided that Cr: 0.10% by mass or less and
   Al: 0.10% by mass or less,
   wherein a Nb content [Nb] of the wire expressed in % by mass based on the total mass of the wire and
   a V content [V] of the wire expressed in % by mass based on the total mass of the wire
      satisfy [Nb] + [V] = 0.015 or less.

   Preferred embodiments of the present invention relating to a flux-cored wire relate to the following [2] to [5].
[2] The flux-cored wire according to [1], wherein
   a Cu content [Cu] of the wire expressed in % by mass based on the total mass of the wire,
   a Ni content [Ni] of the wire expressed in % by mass based on the total mass of the wire,
   a Mo content [Mo] of the wire expressed in % by mass based on the total mass of the wire,
   a Mn content [Mn] of the wire expressed in % by mass based on the total mass of the wire,
   a Si content [Si] of the wire expressed in % by mass based on the total mass of the wire, and
   a Cr content [Cr] of the wire expressed in % by mass based on the total mass of the wire
   satisfy ([Cu] + [Ni] + [Mo])/([Mn] + [Si] + [Cr] + 10([Nb] + [V])) = 0.55 or more and 0.90 or less.
[3] The flux-cored wire according to [1] or [2], wherein
   a Cu content [Cu] of the wire expressed in % by mass based on the total mass of the wire and
   a Mo content [Mo] of the wire expressed in % by mass based on the total mass of the wire
   satisfy [Cu]/[Mo] = 0.5 or more and 5.0 or less.
[4] The flux-cored wire according to any one of [1] to [3], wherein
   a C content [C]_{O} of the steel sheath expressed in % by mass based on a total mass of the steel sheath and
   a C content [C]_{B} of the wire expressed in % by mass based on the total mass of the wire
   satisfy [C]_{O}/[C]_{B} = 0.37 or less.
[5] The flux-cored wire according to any one of [1] to [4], further comprising at least one selected from the group consisting of Ti, Zr, F, Na, and K,
   a Ti content being 3.3% by mass or more and 6.0% by mass or less,
   a Zr content being 0.25% by mass or less,
   a F content being 0.05% by mass or more and 0.30% by mass or less, and
   a Na and K content being 0.10% by mass or more and 0.30% by mass or less, based on the total mass of the wire.

   The object of the present invention is achieved by the following [6] relating to a gas-shielded arc welding method.
[6] A gas-shielded arc welding method, including gas-shielded arc welding using the flux-cored wire according to any one of [1] to [5].

### Advantageous Effects of Invention

The present invention can provide a flux-cored wire that, even having a Ni content of 1% by mass or less, can provide a weld metal with high strength and low-temperature toughness not only as-welded but also after PWHT.

### Brief Description of Drawings

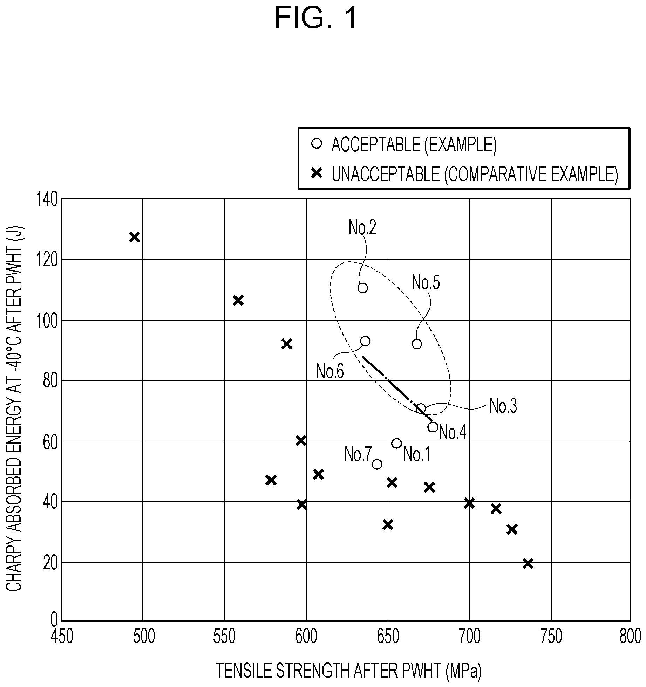

[Fig. 1] Fig. 1 is a graph of the relationship between absorbed energy and tensile strength wherein the vertical axis represents Charpy absorbed energy at -40°C after PWHT and the horizontal axis represents the tensile strength after PWHT.

### Description of Embodiments

A mode for carrying out the present invention (hereinafter referred to as "the present embodiment") is described in detail below. The present invention is not limited to the embodiments described below and may be modified without departing from the gist of the present invention.

Unless otherwise specified, the term "content", as used herein, refers to % by mass based on the total mass of a flux-cored wire. Each element contained in a flux-cored wire according to the present embodiment may be contained in either a steel sheath or flux or in both the steel sheath and the flux.

Furthermore, unless otherwise specified, each element may be contained in a flux-cored wire in the form of metal, in the form of a compound, or in the form of both metal and a compound. Thus, each element contained in any form in a flux-cored wire is defined by a converted value in terms of a single element. For example, for Si, the Si content refers to the total Si-equivalent value of metal Si and Si compounds. The metal Si includes a Si element and Si alloys.

### [1. Flux-Cored Wire]

The flux-cored wire (hereinafter also referred to simply as the "wire") according to the present embodiment is a steel sheath (hereinafter also referred to simply as a "sheath") filled with flux.

In the present embodiment, the outer diameter of the wire is preferably, but not limited to, 0.9 mm or more and 1.6 mm or less, for example. The flux filling ratio can be any value, provided that each element content of the wire is within the scope of the present invention. To further improve wire drawability and wire feedability, the flux filling ratio is preferably, for example, 10% by mass or more and 20% by mass or less based on the total mass of the wire. Furthermore, the wire may have a sheath with or without a seam, and the seam may have any form and any cross-sectional shape.

The present inventors have studied the mechanism by which toughness after PWHT is decreased and have also conducted extensive studies to provide a weld metal with high low-temperature toughness. As a result, the present inventors have completed the present invention on the basis of the following findings.

PWHT causes segregation of an impurity element and precipitation of a carbide at a prior-austenite grain boundary in a weld metal and decreases grain boundary bonding strength. This promotes fracture along the grain boundary, causes temper embrittlement, and decreases the toughness of a weld metal. Furthermore, carbide with a larger size precipitated at the grain boundary by PWHT more significantly decreases the toughness.

Thus, to achieve high low-temperature toughness after PWHT, it is important to (1) reduce temper embrittlement, (2) reduce segregation of an impurity element and precipitation of a carbide at a prior-austenite grain boundary, and (3) reduce coarsening of a grain boundary carbide. The present inventors have found that the chemical composition of a flux-cored wire can be controlled to achieve (1) to (3) and to provide a weld metal with high strength and low-temperature toughness not only as-welded but also after PWHT even when the Ni content is 1% by mass or less.

Specific chemical compositions of wires and the reason for the numerical limitation of the component contents are described in more detail below.

### <C: 0.026 by mass or more and 0.060% by mass or less>

C is a component having the effect of improving the strength of a weld metal. A C content of less than 0.026% by mass results in undesired strength. Thus, the C content based on the total mass of the wire is 0.026 by mass or more, preferably 0.028% by mass or more, more preferably 0.029% by mass or more.

On the other hand, a C content of more than 0.060% by mass results in promoted coarsening of a grain boundary carbide and lower low-temperature toughness after PWHT. Thus, the C content based on the total mass of the wire is 0.060% by mass or less, preferably 0.058% by mass or less, more preferably 0.056% by mass or less.

### <Si: more than 0% by mass and 0.50% by mass or less>

Si is a component that promotes the formation of a hard martensite-austenite constituent, thereby promoting temper embrittlement by PWHT and reducing the low-temperature toughness. A Si content of more than 0.50% by mass results in lower low-temperature toughness after PWHT. Thus, the Si content based on the total mass of the wire is 0.50% by mass or less, preferably 0.45% by mass or less, more preferably 0.40% by mass or less.

On the other hand, Si is a component that cannot be completely decreased to 0% by mass and has the effect of reducing a pore defect as a deoxidizing element. Even a trace amount of Si in the wire can have the effect of reducing a pore defect. Thus, the Si Content based on the total mass of the wire is more than 0% by mass, preferably 0.10% by mass or more, more preferably 0.15% by mass or more.

### <Mn: 1.3% by mass or more and 2.8% by mass or less>

Mn is a component having the effect of improving the strength of a weld metal. A Mn content of less than 1.3% by mass results in undesired strength. Thus, the Mn content based on the total mass of the wire is 1.3% by mass or more, preferably 1.5% by mass or more, more preferably 1.7% by mass or more.

On the other hand, a Mn content of more than 2.8% by mass results in promoted grain boundary segregation of P or the like, temper embrittlement promoted by PWHT, and lower low-temperature toughness. Thus, the Mn content based on the total mass of the wire is 2.8% by mass or less. In a weld metal, the Mn content based on the total mass of the wire is preferably 2.7% by mass or less, more preferably 2.5% by mass or less, to reduce the occurrence of intergranular fracture of a structure mainly composed of an as-casted zone and further improve the low-temperature toughness.

### <Cu: 0.20% by mass or more and 1.50% by mass or less>

Cu is a component having the effect of decreasing the size of the structure of a weld metal and improving the low-temperature toughness while maintaining the strength. A Cu content of less than 0.20% by mass results in undesired strength and low-temperature toughness. Thus, the Cu content based on the total mass of the wire is 0.20% by mass or more, preferably 0.30% by mass or more, more preferably 0.40% by mass or more.

On the other hand, a Cu content of more than 1.50% by mass results in the formation of a precipitate promoted by PWHT and lower toughness. Thus, the Cu content based on the total mass of the wire is 1.50% by mass or less, preferably 1.35% by mass or less, more preferably 1.20% by mass or less. When the wire surface is plated with Cu, the Cu contained in the plating is also included in the Cu content defined in the present embodiment, that is, in the range of 0.20% by mass or more and 1.50% by mass or less.

### <Ni: 0.45% by mass or more and 1.00% by mass or less>

Ni is a component having the effect of improving the low-temperature toughness of a weld metal by strengthening the matrix. A Ni content of less than 0.45% by mass results in undesired low-temperature toughness. Thus, the Ni content based on the total mass of the wire is 0.45% by mass or more, preferably 0.50% by mass or more, more preferably 0.60% by mass or more.

On the other hand, a Ni content of more than 1.00% by mass results in a weld metal with a Ni content outside the range specified in NACE MR 0175 and increased susceptibility to sulfide stress corrosion cracking in a hydrogen sulfide environment. Thus, the Ni content based on the total mass of the wire is 1.00% by mass or less.

### <Mo: 0.15% by mass or more and 0.65% by mass or less>

Mo is a component that improves the strength and has the effect of reducing temper embrittlement. Fine precipitation of Mo₂C in a grain of a weld metal can reduce the growth of a carbide precipitated at the grain boundary and reduce the decrease in the low-temperature toughness after PWHT. At a Mo content of less than 0.15% by mass, it is impossible to achieve desired low-temperature toughness after PWHT while maintaining desired strength. Thus, the Mo content based on the total mass of the wire is 0.15% by mass or more, preferably 0.18% by mass or more, more preferably 0.20% by mass or more.

On the other hand, a Mo content of more than 0.65% by mass results in excessively increased strength and the low-temperature toughness decreased by PWHT. Thus, the Mo content based on the total mass of the wire is 0.65% by mass or less, preferably 0.60% by mass or less, more preferably 0.55% by mass or less.

### <Mg: 0.30% by mass or more and 0.65% by mass or less>

Mg is a component that has a deoxidation effect and improves the strength. A Mg content of less than 0.30% by mass results in undesired strength. Thus, the Mg content based on the total mass of the wire is 0.30% by mass or more, preferably 0.33% by mass or more, more preferably 0.36% by mass or more.

On the other hand, a Mg content of more than 0.65% by mass results in excessively increased strength and lower low-temperature toughness. Thus, the Mg content based on the total mass of the wire is 0.65% by mass or less, preferably 0.62% by mass or less, more preferably 0.60% by mass or less.

### <B: 0.001% by mass or more and 0.010% by mass or less>

B is a component that segregates at a prior-austenite grain boundary, suppresses proeutectoid ferrite, and thereby has the effect of improving the toughness of a weld metal. A B content of less than 0.001% by mass based on the total mass of the wire results in an insufficient effect of improving the toughness of a weld metal. Thus, the B content based on the total mass of the wire is 0.001% by mass or more, preferably 0.002% by mass or more.

On the other hand, a B content of more than 0.010% by mass results in a precipitate excessively formed by PWHT and lower toughness. Thus, the B content based on the total mass of the wire is 0.010% by mass or less, preferably 0.009% by mass or less.

### <Cr: 0.10% by mass or less>

Cr is a component that promotes the precipitation and growth of a coarse grain boundary carbide by PWHT and reduces the low-temperature toughness. A Cr content of more than 0.10% by mass based on the total mass of the wire results in lower low-temperature toughness after PWHT. Thus, the Cr content based on the total mass of the wire is 0.10% by mass or less, preferably 0.07% by mass or less, more preferably 0.05% by mass or less.

### <Al: 0.10% by mass or less>

Al is a component that prevents nucleation of acicular ferrite when excessively contained in the wire and reduces the toughness regardless of the presence or absence of PWHT. An Al content of more than 0.10% by mass results in a weld metal with lower toughness. Thus, the Al content based on the total mass of the wire is 0.10% by mass or less, preferably 0.09% by mass or less.

### <[Nb] + [V]: 0.015 or less>

Nb and V are components that precipitate a carbide by PWHT and thereby reduce the low-temperature toughness. [Nb] + [V] of more than 0.015 results in lower low-temperature toughness after PWHT, wherein [Nb] denotes the Nb content of the wire expressed in % by mass based on the total mass of the wire and [V] denotes the V content of the wire expressed in % by mass based on the total mass of the wire. Thus, [Nb] + [V] is 0.015 or less, preferably 0.010 or less.

### <Formula A = ([Cu] + [Ni] + [Mo])/([Mn] + [Si] + [Cr] + 10([Nb] + [V])): 0.55 or more and 0.90 or less>

In the flux-cored wire according to the present embodiment, in addition to each component content, the relationships between the Mn content, the Si content, the Cr content, the Nb content, and the V content, and the Cu content, the Ni content, and the Mo content are also important. The present inventors have found that appropriately controlling the value obtained by the following formula A while specifying each component content can further improve the low-temperature toughness after PWHT.

### ([Cu] + [Ni] + [Mo])/([Mn] + [Si] + [Cr] + 10([Nb] + [V])) (formula A)

When the value obtained using the formula A is 0.55 or more and 0.90 or less, it is possible to reduce the precipitation of a coarse carbide at a prior-austenite grain boundary by PWHT and, even when a coarse carbide is precipitated, reduce the growth of the precipitated carbide. This can further improve the low-temperature toughness after PWHT while maintaining the strength of a weld metal.

Thus, the value obtained using the formula A is preferably 0.55 or more and 0.90 or less, more preferably 0.58 or more and 0.85 or less.

In the formula A, [Cu] denotes the Cu content expressed in % by mass based on the total mass of the wire.

[Ni] denotes the Ni content of the wire expressed in % by mass based on the total mass of the wire.

[Mo] denotes the Mo content of the wire expressed in % by mass based on the total mass of the wire.

[Mn] denotes the Mn content of the wire expressed in % by mass based on the total mass of the wire.

[Si] denotes the Si content of the wire expressed in % by mass based on the total mass of the wire.

[Cr] denotes the Cr content of the wire expressed in % by mass based on the total mass of the wire.

[Nb] denotes the Nb content of the wire expressed in % by mass based on the total mass of the wire.

[V] denotes the V content of the wire expressed in % by mass based on the total mass of the wire.

### <Formula B = [Cu]/[Mo]: 0.5 or more and 5.0 or less>

Cu is a component having the effect of improving the low-temperature toughness while maintaining the strength of a weld metal after PWHT, and Mo is a component having the effect of improving the strength while maintaining the low-temperature toughness after PWHT. The present inventors have found that setting the ratio of Cu to Mo having these effects, that is, the value obtained by the following formula B, to 0.5 or more and 5.0 or less can further improve the balance between the strength and the low-temperature toughness of a weld metal after PWHT.

### [Cu]/[Mo] (formula B)

Thus, the value obtained using the formula B is preferably 0.5 or more and 5.0 or less, more preferably 1.2 or more and 3.5 or less.

In the formula B, [Cu] denotes the Cu content expressed in % by mass based on the total mass of the wire, and [Mo] denotes the Mo content of the wire expressed in % by mass based on the total mass of the wire.

### <[C]_{O}/[C]_{B}: 0.37 or less>

The present inventors have focused on the yield of C in a weld metal from the sheath and the flux and have found that the yield of C in the weld metal is lower in C from the sheath than in C from the flux and that this can further improve the low-temperature toughness after PWHT. More specifically, when the C content [C]ₒ of the steel sheath expressed in % by mass based on the total mass of the steel sheath and the C content [C]_{B} of the wire expressed in % by mass based on the total mass of the wire satisfy [C]_{O}/[C]_{B} = 0.37 or less, it is possible to produce the effect of reducing the precipitation of a coarse carbide at a prior-austenite grain boundary and further improving the low-temperature toughness after PWHT.

Thus, [C]_{O}/[C]_{B} is preferably 0.37 or less, more preferably 0.35 or less.

On the other hand, the lower limit of [C]_{O}/[C]_{B} is not particularly specified and is preferably 0.10 or more, more preferably 0.13 or more, to increase the hardness of the sheath and improve the wire feedability.

### <Total content of C, Si, Mn, Cu, Ni, Mo, Mg, B, Cr, Al, Nb, and V: 3.0% by mass or more and 7.0% by mass or less>

In the present embodiment, the total C, Si, Mn, Cu, Ni, Mo, Mg, B, Cr, Al, Nb, and V content is preferably 3.0% by mass or more, more preferably 3.5% by mass or more, to improve welding performance. Furthermore, to improve wire drawability, the total component content is preferably 7.0% by mass or less, more preferably 6.0% by mass or less.

The wire according to the present embodiment preferably further contains at least one selected from the group consisting of Ti, Zr, F, Na, and K within the following content ranges. The reason for limiting these element contents of the wire is described below.

### <Ti: 3.3% by mass or more and 6.0% by mass or less>

Ti is a component that functions as a slag former, facilitates welding in a welding position other than the flat position, for example, in a vertical-up position or an overhead position, and has the effect of providing high welding performance in all positions. Where the wire contains Ti, the Ti content based on the total mass of the wire is preferably 3.3% by mass or more and 6.0% by mass or less, more preferably 3.6% by mass or more and 5.5% by mass or less, to appropriately maintain the amount of slag to be formed and provide high welding performance.

### <Zr: 0.25% by mass or less>

Zr is a component having the effect of improving bead wetting and forming a flat bead shape. When the wire contains Zr, the Zr content based on the total mass of the wire is preferably 0.25% by mass or less, more preferably 0.20% by mass or less, to improve bead wetting and form a flat bead shape while maintaining high slag detachability.

### <F: 0.05% by mass or more and 0.30% by mass or less>

F is a component having the effect of stabilizing arc. When the wire contains F, the F content based on the total mass of the wire is preferably 0.05% by mass or more and 0.30% by mass or less, more preferably 0.10% by mass or more and 0.25% by mass or less, to reduce the amount of spatter and sufficiently stabilize the arc.

### <Total Na and K content: 0.10% by mass or more and 0.30% by mass or less>

Na and K are components having the effect of stabilizing the arc. When the wire contains at least one of Na and K, the total Na and K content based on the total mass of the wire is preferably 0.10% by mass or more and 0.30% by mass or less, more preferably 0.12% by mass or more and 0.28% by mass or less, to reduce the amount of spatter and sufficiently stabilize the arc.

### <Other Components and Impurities>

Fe is a main component of the wire according to the present embodiment. The Fe content based on the total mass of the wire is preferably 82% by mass or more, more preferably 85% by mass or more.

In the present embodiment, O (oxygen), Ca, Ba, Li, or the like may be contained in addition to the above components, and the O (oxygen) content based on the total mass of the wire is preferably 1% by mass or more, more preferably 5% by mass or less.

The total content of Ca, Ba, Li, and the like based on the total mass of the wire is preferably 1% by mass or less. Preferably, the remainder is composed of incidental impurities, and the total amount of the incidental impurities is limited to 0.15% by mass or less based on the total mass of the wire. Examples of the incidental impurities include P and S, and, to prevent hot cracking, the P content and the S content based on the total mass of the wire are each preferably 0.015% by mass or less.

### [2. Method for Producing Flux-Cored Wire]

The flux-cored wire according to the present embodiment can be produced, for example, by the following method. First, a steel strip to form the sheath is fed in the longitudinal direction and is formed with a forming roller into a U-shaped open tube. The sheath is then filled with a flux with a predetermined chemical composition containing predetermined amounts of metal or alloy, compound, and the like, and is then processed to have a circular cross section. The joint of the sheath may be made seamless by welding or the like. The wire is then drawn by cold working to have a wire diameter of, for example, 0.9 mm or more and 2.0 mm or less, thus producing a flux-cored wire. Annealing may be performed during the cold working.

### [3. Gas-Shielded Arc Welding Method]

The gas-shielded arc welding method according to the present embodiment is a welding method using the flux-cored wire according to the present embodiment described in [1. Flux-Cored Wire].

In the gas-shielded arc welding method according to the present embodiment, the welding conditions other than the use of the flux-cored wire according to the present embodiment are not particularly limited and may be typical conditions of a welding method using a flux-cored wire with respect to the type of base material, welding voltage, welding current, welding position, and the like. The shielding gas is also not limited and is preferably MAG, more preferably 80% by volume of Ar-20% by volume of CO₂, to further improve the welding performance.

### EXAMPLES

Examples and comparative examples of the flux-cored wire according to the present embodiment are described below.

### [I. Evaluation of Mechanical Properties of Weld Metal] (Production of Wire)

First, a strip of steel sheath was filled with flux to produce a flux-cored wire with a diameter of 1.2 mm containing various components shown in Table 1. The flux filling ratio was controlled in the range of 13.5% by mass or more and 15.5% by mass or less.

### (Gas-Shielded Arc Welding)

Next, the flux-cored wire was used for gas-shielded arc welding of a base material having a thickness and chemical components shown in Table 2 below.

In the present example, buttering was applied at a thickness of 3 mm or more to a groove surface of the base material and the surface of a backing steel sheet, a V-groove was formed, and gas-shielded arc welding was performed under the welding conditions CI shown in Table 3 below to form a deposited metal.

### (Evaluation of Mechanical Properties)

The mechanical properties of the deposited metal were evaluated in terms of tensile performance and impact performance in accordance with the "Methods of tension and impact tests for deposited metal" specified in JIS Z 3111: 2005 by collecting a tensile test specimen (No. A0) and an impact test specimen (V-notch test specimen) from the center of the deposited metal in the thickness direction.

A tensile test was performed at room temperature (approximately 20 ± 2°C) on an as-welded test specimen and a test specimen subjected to PWHT at a temperature of 620°C for 8 hours. The yield stress and tensile strength were measured to evaluate the tensile performance.

In the present example, a yield stress (YS) of 500 MPa or more and a tensile strength (TS) of 620 MPa or more were judged to be good in the test specimens as-welded and after PWHT.

An impact test was performed on an as-welded test specimen and a test specimen subjected to PWHT at a temperature of 620°C for 8 hours. The toughness of each test specimen was evaluated by measuring Charpy absorbed energy (vE-40°C) at a test temperature of -40°C.

In the present example, the toughness was judged to be good when the absorbed energy at -40°C in the test specimens as-welded and after PWHT was 50 J or more.

Test specimens with high strength and toughness both as-welded and after PWHT were judged to be acceptable, and the other test specimens were judged to be unacceptable.

The chemical components of the wires used are shown in Tables 4 and 5 below, and the evaluation results of the mechanical properties are also shown in Table 5. In Tables 4 and 5, [C]ₒ denotes the C content of the sheath expressed in % by mass based on the total mass of the steel sheath, and [C]_{B} denotes the C content of the wire expressed in % by mass based on the total mass of the wire.

[Nb] denotes the Nb content of the wire expressed in % by mass based on the total mass of the wire, and [V] denotes the V content of the wire expressed in % by mass based on the total mass of the wire.

The formula A represents ([Cu] + [Ni] + [Mo])/([Mn] + [Si] + [Cr] + 10([Nb] + [V])).

In the formula A, [Cu] denotes the Cu content expressed in % by mass based on the total mass of the wire.

[Ni] denotes the Ni content of the wire expressed in % by mass based on the total mass of the wire.

[Mo] denotes the Mo content of the wire expressed in % by mass based on the total mass of the wire.

[Mn] denotes the Mn content of the wire expressed in % by mass based on the total mass of the wire.

[Si] denotes the Si content of the wire expressed in % by mass based on the total mass of the wire.

[Cr] denotes the Cr content of the wire expressed in % by mass based on the total mass of the wire.

[Nb] denotes the Nb content of the wire expressed in % by mass based on the total mass of the wire.

[V] denotes the V content of the wire expressed in % by mass based on the total mass of the wire.

The formula B represents [Cu] / [Mo] In the formula B, [Cu] denotes the Cu content expressed in % by mass based on the total mass of the wire. [Mo] denotes the Mo content of the wire expressed in % by mass based on the total mass of the wire.

The remainder of the wire except the chemical components listed in Tables 4 and 5 was composed of Fe and incidental impurities. The Mo content "-" in Table 4 indicates the quantification limit 0.010% by mass or less, and the Zr content "-" in Table 5 indicates the quantification limit 0.010% by mass or less. Furthermore, when the denominator, the Mo content, was "-; below the quantification limit", the "Value obtained by formula B" in Table 5 could not be calculated and was indicated by "-". In Comparative Examples No. 14, 15, and 17, the numerator, the Cu content, was much smaller than the denominator, the Mo content, and the value was rounded to the second decimal place and was expressed as "0.0".

In the evaluation of the mechanical properties shown in Table 5, although all the test specimens of the examples were subjected to the tensile test and the impact test as-welded and after PWHT, some test specimens that did not have the desired strength and toughness after PWHT were not subjected to the evaluation of as-welded and were indicated by "-" in the evaluation result column.

### [Table 1]

**Table 1**

| | | | | | |
|---|---|---|---|---|---|
| Steel sheath | Standard | Chemical components (% by mass) | | | |
| | JIS G 3141 SPCC steel sheet | C | Mn | P | S |
| | | ≤ 0.15 | ≤ 1.00 | ≤ 0.100 | ≤ 0.035 |

[Table 2]

**Table 2**

| | | | | | | | |
|---|---|---|---|---|---|---|---|
| Base material | Standard | Sheet thickness (mm) | Chemical components (% by mass) | | | | |
| | | | C | Si | Mn | P | S |
| | JIS G 3106 SM490A | 20 | 0.14 | 0.17 | 1.08 | 0.010 | 0.001 |

### [Table 3]

**Table 3**

| | Welding conditions CI | Welding conditions CII |
|---|---|---|
| Type and flow rate of shielding gas | 80% Ar - 20%CO₂, 25 l/min | 80% Ar - 20%CO₂, 25 l/min |
| Wire diameter | 1.2 mm | 1.2 mm |
| Welding position | Flat position | Vertical-up position |
| Groove shape | V-shaped | T fillet |
| Groove angle | 20° | - |
| Groove gap | 16 mm | - |
| Welding current | 280 A | 220 A |
| Arc voltage | 29 V | 25 V |
| Welding speed | 350 mm/min | 150-200 mm/min |
| Preheating temperature | 140-160°C | - |
| Temperature between passes | 140-160°C | - |
| Layering method | 6 layers 12 passes | - |
| Weaving | - | None (straight up) |

### [Table 4]

**Table 4**

| No. | | [C]_{O}/[C]_{B} | Chemical components of wire (% by mass) | | | | | | | | | | [Nb]+[V] |
|---|---|---|---|---|---|---|---|---|---|---|---|---|---|
| | | | C | Si | Mn | Cu | Ni | Mo | Mg | B | Cr | Al | |
| Example | 1 | 0.26 | 0.043 | 0.26 | 2.0 | 1.12 | 0.85 | 0.22 | 0.48 | 0.008 | 0.01 | 0.08 | 0.003 |
| | 2 | 0.25 | 0.044 | 0.26 | 2.1 | 0.61 | 0.86 | 0.22 | 0.48 | 0.008 | 0.01 | 0.08 | 0.003 |
| | 3 | 0.25 | 0.044 | 0.26 | 2.1 | 0.76 | 0.86 | 0.22 | 0.48 | 0.008 | 0.01 | 0.08 | 0.003 |
| | 4 | 0.25 | 0.044 | 0.26 | 2.1 | 0.21 | 0.86 | 0.48 | 0.48 | 0.008 | 0.01 | 0.08 | 0.003 |
| | 5 | 0.25 | 0.044 | 0.26 | 2.1 | 0.41 | 0.86 | 0.43 | 0.48 | 0.008 | 0.01 | 0.08 | 0.003 |
| | 6 | 0.36 | 0.045 | 0.26 | 2.5 | 0.41 | 0.85 | 0.33 | 0.48 | 0.008 | 0.02 | 0.08 | 0.003 |
| | 7 | 0.38 | 0.029 | 0.24 | 2.7 | 0.36 | 0.87 | 0.37 | 0.49 | 0.006 | 0.01 | 0.08 | 0.003 |
| Comparative example | 8 | 0.26 | 0.043 | 0.26 | 2.1 | 2.48 | 0.01 | 0.22 | 0.48 | 0.008 | 0.01 | 0.08 | 0.003 |
| | 9 | 0.44 | 0.025 | 0.26 | 1.2 | 1.77 | 0.93 | 0.24 | 0.52 | 0.009 | 0.01 | 0.09 | 0.003 |
| | 10 | 0.18 | 0.060 | 0.27 | 2.9 | 0.61 | 0.86 | 0.22 | 0.48 | 0.008 | 0.01 | 0.08 | 0.003 |
| | 11 | 0.38 | 0.029 | 0.24 | 2.1 | 1.20 | 0.87 | 0.19 | 0.49 | 0.006 | 0.26 | 0.08 | 0.003 |
| | 12 | 0.15 | 0.071 | 0.66 | 2.0 | 0.01 | 0.81 | - | 0.29 | 0.011 | 0.01 | 0.20 | 0.003 |
| | 13 | 0.16 | 0.067 | 0.45 | 2.1 | 0.32 | 0.89 | - | 0.53 | 0.010 | 0.01 | 0.08 | 0.003 |
| | 14 | 0.35 | 0.031 | 0.24 | 2.0 | 0.01 | 0.88 | 0.19 | 0.62 | 0.006 | 0.46 | 0.08 | 0.003 |
| | 15 | 0.23 | 0.047 | 0.25 | 2.1 | 0.01 | 0.88 | 0.19 | 0.70 | 0.006 | 0.28 | 0.08 | 0.003 |
| | 16 | 0.22 | 0.051 | 0.26 | 2.2 | 0.27 | 0.87 | 0.14 | 0.70 | 0.009 | 0.01 | 0.08 | 0.003 |
| | 17 | 0.25 | 0.044 | 0.27 | 2.1 | 0.01 | 0.86 | 0.68 | 0.48 | 0.008 | 0.01 | 0.08 | 0.003 |
| | 18 | 0.23 | 0.047 | 0.34 | 2.2 | 0.41 | 0.94 | - | 0.50 | 0.008 | 0.22 | 0.08 | 0.003 |
| | 19 | 0.27 | 0.041 | 0.84 | 1.8 | 0.23 | 0.88 | - | 0.36 | 0.008 | 0.01 | 0.08 | 0.015 |
| | 20 | 0.52 | 0.044 | 0.78 | 2.1 | 0.01 | 0.41 | - | 0.43 | 0.008 | 0.02 | 0.11 | 0.011 |

### [Table 5]

**Table 5**

| No. | | Chemical components of wire (% by mass) | | | | Value obtained using formula A | Value obtained using formula B | Evaluation results | | | | | |
|---|---|---|---|---|---|---|---|---|---|---|---|---|---|
| | | Ti | Zr | F | Total of Na and K | | | After PWHT | | | As-welded | | |
| | | | | | | | | Yield strength YS (MPa) | Tensile strength TS (MPa) | vE-40°C (J) | Yield strength YS (MPa) | Tensile strength TS (MPa) | vE-40°C (J) |
| Example | 1 | 4.2 | - | 0.16 | 0.16 | 0.95 | 5.1 | 586 | 656 | 59 | 593 | 669 | 98 |
| | 2 | 4.3 | - | 0.16 | 0.16 | 0.70 | 2.8 | 559 | 635 | 111 | 609 | 667 | 112 |
| | 3 | 4.3 | - | 0.16 | 0.16 | 0.77 | 3.5 | 600 | 671 | 71 | 615 | 673 | 115 |
| | 4 | 4.3 | - | 0.16 | 0.16 | 0.65 | 0.4 | 617 | 678 | 65 | 650 | 694 | 90 |
| | 5 | 4.3 | - | 0.16 | 0.16 | 0.71 | 1.0 | 605 | 668 | 92 | 645 | 689 | 108 |
| | 6 | 3.6 | 0.18 | 0.16 | 0.16 | 0.57 | 1.2 | 572 | 637 | 93 | 596 | 662 | 111 |
| | 7 | 4.4 | - | 0.16 | 0.16 | 0.53 | 1.0 | 573 | 644 | 52 | 648 | 707 | 103 |
| Comparative example | 8 | 4.3 | - | 0.16 | 0.16 | 1.13 | 11.3 | 637 | 651 | 33 | - | - | - |
| | 9 | 4.6 | - | 0.17 | 0.17 | 1.96 | 7.4 | 542 | 608 | 50 | - | - | - |
| | 10 | 4.3 | - | 0.16 | 0.16 | 0.53 | 2.8 | 676 | 718 | 38 | - | - | - |
| | 11 | 4.4 | - | 0.16 | 0.16 | 0.87 | 6.3 | 614 | 677 | 45 | 623 | 689 | 86 |
| | 12 | 3.4 | - | 0.11 | 0.27 | 0.30 | - | 388 | 495 | 128 | 453 | 535 | 128 |
| | 13 | 3.9 | - | 0.14 | 0.15 | 0.47 | - | 457 | 559 | 106 | 516 | 608 | 122 |
| | 14 | 4.3 | - | 0.14 | 0.14 | 0.40 | 0.1 | 517 | 598 | 39 | 597 | 660 | 88 |
| | 15 | 4.3 | - | 0.16 | 0.15 | 0.40 | 0.1 | 672 | 727 | 31 | 714 | 759 | 60 |
| | 16 | 4.2 | - | 0.16 | 0.16 | 0.51 | 1.9 | 684 | 738 | 19 | 741 | 781 | 39 |
| | 17 | 4.3 | - | 0.16 | 0.16 | 0.65 | 0.0 | 644 | 701 | 39 | 686 | 729 | 80 |
| | 18 | 4.4 | - | 0.17 | 0.17 | 0.48 | - | 515 | 598 | 60 | 566 | 631 | 127 |
| | 19 | 3.9 | 0.27 | 0.11 | 0.14 | 0.40 | - | 485 | 588 | 92 | 550 | 627 | 109 |
| | 20 | 3.2 | 0.29 | 0.07 | 0.10 | 0.14 | - | 473 | 579 | 47 | - | - | - |

| | | | | | | | | | | | | | |
|---|---|---|---|---|---|---|---|---|---|---|---|---|---|
| Formula A: ([Cu] + [Ni] + [Mo])/([Mn] + [Si] + [Cr] + 10([Nb] + [V])) Formula B: [Cu]/[Mo] | | | | | | | | | | | | | |

As shown in Tables 4 and 5, in Example Nos. 1 to 7, in which each component content of the wire was within the numerical range of the present invention, the yield stress (YS) as-welded and after PWHT was desired 500 MPa or more, the tensile strength (TS) was desired 620 MPa or more, and the absorbed energy at -40°C was desired 50 J or more. Thus, the weld metals not only as-welded but also after PWHT had high strength and low-temperature toughness.

In particular, in Example Nos. 1 to 6, in which [C]_{O}/[C]_{B} was within the preferred numerical range of the present invention, the absorbed energy at -40°C after PWHT was 55 J or more, and the low-temperature toughness after PWHT could be further improved as compared with Example No. 7. Furthermore, in Example Nos. 2 to 6, in which the values obtained using the formula A were within the preferred numerical range of the present invention, the absorbed energy at -40°C after PWHT was 65 J or more, and the toughness after PWHT could be further improved.

Fig. 1 is a graph of the relationship between absorbed energy and tensile strength wherein the vertical axis represents Charpy absorbed energy (J) at -40°C after PWHT and the horizontal axis represents the tensile strength (MPa) after PWHT. In Fig. 1, "o" indicates examples, and "x" indicates comparative examples. "No." described near the "o" is "No." of each example, and "No." is omitted for the comparative examples.

A straight line obtained by linear approximation of the examples "o" is indicated by a dash-dotted line in Fig. 1.

Values obtained using the formula B in Example Nos. 2, 3, 5, and 6 in the region within the broken line in Fig. 1 were within the preferred numerical range of the present invention. Thus, the balance between tensile strength and toughness after PWHT was further improved.

On the other hand, Comparative Example No. 8, in which the Cu content of the wire exceeded the upper limit of the numerical range of the present invention and the Ni content of the wire was below the lower limit of the numerical range of the present invention, had lower toughness after PWHT.

Comparative Example No. 9, in which the C content and the Mn content of the wire were below the lower limit of the numerical range of the present invention, had lower tensile strength after PWHT. Furthermore, although the toughness after PWHT was judged to be good, the Cu content of the wire exceeded the upper limit of the numerical range of the present invention, so that the toughness was decreased as compared with the examples.

Comparative Example No. 10, in which the Mn content of the wire exceeded the upper limit of the numerical range of the present invention, had lower toughness after PWHT.

Comparative Example No. 11, in which the Cr content of the wire exceeded the upper limit of the numerical range of the present invention, had lower toughness after PWHT.

Comparative Example No. 12, in which the Cu content, the Mo content, and the Mg content of the wire were below the lower limit of the numerical range of the present invention, had lower yield stress and tensile strength as-welded and after PWHT.

Comparative Example No. 13, in which the Mo content of the wire was below the lower limit of the numerical range of the present invention, had lower yield stress and tensile strength after PWHT.

Comparative Example No. 14, in which the Cr content of the wire exceeded the upper limit of the numerical range of the present invention and the Cu content of the wire was below the lower limit of the numerical range of the present invention, had lower tensile strength as-welded and lower toughness after PWHT. Furthermore, the Cu content of the wire was below the lower limit of the numerical range of the present invention, so that the tensile strength after PWHT was decreased.

Comparative Example No. 15, in which the Cr content and the Mg content of the wire exceeded the upper limit of the numerical range of the present invention and the Cu content of the wire was below the lower limit of the numerical range of the present invention, had lower toughness after PWHT.

Comparative Example No. 16, in which the Mg content of the wire exceeded the upper limit of the numerical range of the present invention and the Mo content of the wire was below the lower limit of the numerical range of the present invention, had lower toughness both as-welded and after PWHT.

Comparative Example No. 17, in which the Mo content of the wire exceeded the upper limit of the numerical range of the present invention and the Cu content of the wire was below the lower limit of the numerical range of the present invention, had lower toughness after PWHT.

Comparative Example No. 18, in which the Mo content of the wire was below the lower limit of the numerical range of the present invention, had lower tensile strength after PWHT.

Comparative Example No. 19, in which the Mo content of the wire was below the lower limit of the numerical range of the present invention, had lower yield stress and tensile strength after PWHT.

Comparative Example No. 20, in which the Si content and the Al content of the wire exceeded the upper limit of the numerical range of the present invention and the Cu content, the Ni content, and the Mo content of the wire were below the lower limit of the numerical range of the present invention, had lower toughness after PWHT. Furthermore, due to particularly low Cu and Mo contents of the wire, the yield stress and tensile strength after PWHT were decreased.

### [II. Evaluation of Welding Performance]

Using the wire used to evaluate the mechanical properties of the weld metal, a base material according to JIS G 3106 SM490A was subjected to gas-shielded arc welding under the welding conditions CII shown in Table 3 to evaluate welding performance.

As a result, any of the wires of Example Nos. 1 to 7 had high welding performance.

Although various embodiments have been described above with reference to the drawings, it goes without saying that the present invention is not limited to these examples. It will be apparent to those skilled in the art that various variations and modifications can be made within the scope of the appended claims, and it is understood that they also fall within the technical scope of the present invention. The constituents in the above embodiments may be arbitrarily combined without departing from the gist of the present invention.

The present application is based on Japanese Patent Application (Japanese Patent Application No. 2020-210727) filed on December 18, 2020, the contents of which are incorporated herein by reference.

## Claims

1. A flux-cored wire with a steel sheath filled with flux, comprising:
based on a total mass of the wire,
C: 0.026% by mass or more and 0.060% by mass or less,
Si: more than 0% by mass and 0.50% by mass or less,
Mn: 1.3% by mass or more and 2.8% by mass or less,
Cu: 0.20% by mass or more and 1.50% by mass or less,
Ni: 0.45% by mass or more and 1.00% by mass or less,
Mo: 0.15% by mass or more and 0.65% by mass or less,
Mg: 0.30% by mass or more and 0.65% by mass or less, and
B: 0.001% by mass or more and 0.010% by mass or less,
provided that Cr: 0.10% by mass or less and
Al: 0.10% by mass or less,
wherein a Nb content [Nb] of the wire expressed in % by mass based on the total mass of the wire and
a V content [V] of the wire expressed in % by mass based on the total mass of the wire satisfy [Nb] + [V] = 0.015 or less.

2. The flux-cored wire according to claim 1, wherein
a Cu content [Cu] of the wire expressed in % by mass based on the total mass of the wire,
a Ni content [Ni] of the wire expressed in % by mass based on the total mass of the wire,
a Mo content [Mo] of the wire expressed in % by mass based on the total mass of the wire,
a Mn content [Mn] of the wire expressed in % by mass based on the total mass of the wire,
a Si content [Si] of the wire expressed in % by mass based on the total mass of the wire, and
a Cr content [Cr] of the wire expressed in % by mass based on the total mass of the wire
satisfy ([Cu] + [Ni] + [Mo])/([Mn] + [Si] + [Cr] + 10([Nb] + [V])) = 0.55 or more and 0.90 or less.

3. The flux-cored wire according to claim 1 or 2, wherein
a Cu content [Cu] of the wire expressed in % by mass based on the total mass of the wire and
a Mo content [Mo] of the wire expressed in % by mass based on the total mass of the wire
satisfy [Cu]/[Mo] = 0.5 or more and 5.0 or less.

4. The flux-cored wire according to claim 1 or 2, wherein
a C content [C]ₒ of the steel sheath expressed in % by mass based on a total mass of the steel sheath and
a C content [C]_{B} of the wire expressed in % by mass based on the total mass of the wire
satisfy [C]_{O}/[C]_{B} = 0.37 or less.

5. The flux-cored wire according to claim 3, wherein
a C content [C]ₒ of the steel sheath expressed in % by mass based on a total mass of the steel sheath and
a C content [C]_{B} of the wire expressed in % by mass based on the total mass of the wire
satisfy [C]_{O}/[C]_{B} = 0.37 or less.

6. The flux-cored wire according to claim 1 or 2, further comprising at least one selected from the group consisting of Ti, Zr, F, Na, and K,
a Ti content being 3.3% by mass or more and 6.0% by mass or less,
a Zr content being 0.25% by mass or less,
a F content being 0.05% by mass or more and 0.30% by mass or less, and
a Na and K content being 0.10% by mass or more and 0.30% by mass or less, based on the total mass of the wire.

7. The flux-cored wire according to claim 3, further comprising at least one selected from the group consisting of Ti, Zr, F, Na, and K,
a Ti content being 3.3% by mass or more and 6.0% by mass or less,
a Zr content being 0.25% by mass or less,
a F content being 0.05% by mass or more and 0.30% by mass or less, and
a Na and K content being 0.10% by mass or more and 0.30% by mass or less, based on the total mass of the wire.

8. The flux-cored wire according to claim 4, further comprising at least one selected from the group consisting of Ti, Zr, F, Na, and K,
a Ti content being 3.3% by mass or more and 6.0% by mass or less,
a Zr content being 0.25% by mass or less,
a F content being 0.05% by mass or more and 0.30% by mass or less, and
a Na and K content being 0.10% by mass or more and 0.30% by mass or less, based on the total mass of the wire.

9. The flux-cored wire according to claim 5, further comprising at least one selected from the group consisting of Ti, Zr, F, Na, and K,
a Ti content being 3.3% by mass or more and 6.0% by mass or less,
a Zr content being 0.25% by mass or less,
a F content being 0.05% by mass or more and 0.30% by mass or less, and
a Na and K content being 0.10% by mass or more and 0.30% by mass or less, based on the total mass of the wire.

10. A gas-shielded arc welding method, comprising gas-shielded arc welding using the flux-cored wire according to claim 1 or 2.

11. A gas-shielded arc welding method, comprising gas-shielded arc welding using the flux-cored wire according to claim 3.
